# EUROPÄISCHE PATENTANMELDUNG

(11) **EP 3 106 820 A2**
(43) Veröffentlichungstag der Anmeldung: **21.12.2016**
(21) Anmeldenummer: 16171926.5
(22) Anmeldetag: 30.05.2016
(51) Int. Cl.: F28F 9/00, F28D 7/16, F28D 21/00, F02M 26/11

(54) **WÄRMEÜBERTRAGER**

(30) Priorität: 15.06.2015 DE 102015210942
(71) Anmelder: Mahle International GmbH, 70376 Stuttgart (DE)
(72) Erfinder: Siegel, Albrecht, 71642 Ludwigsburg (DE); Faber, Christian, 70619 Stuttgart (DE); Hund, Simon, 70199 Stuttgart (DE); Horntasch, Leander, 71729 Erdmannhausen (DE); Lerchner, Pascal, 70806 Kornwestheim (DE)
(74) Vertreter: Grauel, Andreas

(57) **Zusammenfassung**

Die Erfindung betrifft einen Wärmeübertrager (1, 101), insbesondere einen Abgaswärmeübertrager oder einen Ladeluftkühler für ein Kraftfahrzeug, mit einem Gehäuse (2, 102) mit einer ersten Gehäuseseite (3, 103) und mit einer der ersten Gehäuseseite (3, 103) gegenüberliegenden zweiten Gehäuseseite (4, 104) und mit einer Gehäuseinnenwand (5, 105) und mit einer Gehäuseaußenwand (6, 106), wobei in dem Gehäuse (2, 102) von einem Gas durchströmbare Rohre (7, 107) angeordnet sind, welche jeweils ein erstes Rohrende (8, 108) und ein dem ersten Rohrende (8, 108) gegenüberliegendes zweites Rohrende (9, 109) aufweisen, und mit einem im Bereich der ersten Gehäuseseite (3, 103) angeordneten ersten Rohrboden (10, 110), wobei der erste Rohrboden (10, 110) eine Anzahl erster Durchführungsöffnungen (11, 111) aufweist, welche von den ersten Rohrenden (8, 108) durchragt werden, und mit einem im Bereich der zweiten Gehäuseseite (4, 104) angeordneten zweiten Rohrboden (12, 112), wobei der zweite Rohrboden (12, 112) eine Anzahl zweiter Durchführungsöffnungen (13, 113) aufweist, welche von den zweiten Rohrenden (9, 109) durchragt werden, wobei der erste Rohrboden (10, 110) eine erste Ebene bildet und der zweite Rohrboden (12, 112) eine zweite Ebene bildet, wobei der erste Rohrboden (10, 110) einen umlaufenden und in einem ersten Winkel (α) von der ersten Ebene hochgestellten ersten Rand (14, 114) aufweist und der zweite Rohrboden (12, 112) einen umlaufenden und in einem zweiten Winkel (β) von der zweiten Ebene hochgestellten zweiten Rand (15, 115) aufweist, wobei der erste Rand (14, 114) im Bereich der ersten Gehäuseseite (3, 103) mit der Gehäuseinnenwand (5, 105) oder im Bereich der ersten Gehäuseseite (3, 103) mit der Gehäuseaußenwand (6, 106) verbunden ist und/oder der zweite Rand (15, 115) im Bereich der zweiten Gehäuseseite (4, 104) mit der Gehäuseinnenwand (5, 105) oder im Bereich der zweiten Gehäuseseite (4, 104) mit der Gehäuseaußenwand (6, 106) verbunden ist.

## Beschreibung

### Technisches Gebiet

Die Erfindung betrifft einen Wärmeübertrager, insbesondere einen Abgaswärmeübertrager oder einen Ladeluftkühler, insbesondere für ein Kraftfahrzeug, nach dem Oberbegriff von Anspruch 1.

### Stand der Technik

Abgaswärmeübertrager werden in Kraftfahrzeugen beispielsweise in so genannten Abgasrückführsystemen eingesetzt. Dabei wird das Abgas gekühlt und es kommt unter anderem dabei zu einer Reduzierung der bei der Kraftstoffverbrennung entstehenden Schadstoffe und auch zu einem geringeren Kraftstoffverbrauch.

Die DE 199 07 163 C2 offenbart einen Abgaswärmeübertrager mit an beiden Enden in Rohrböden gehaltenen Rohren zur Führung eines Gases und mit einem an die Rohrböden anschließenden und die Rohre umschließenden Gehäuse zur Führung eines flüssigen Kühlmittels. Dabei sind die Rohrböden, die Rohre und das Gehäuse aus hitzebeständigen austenitischen Stahlblechen geformt. Die Rohre sind in die aus einem Blech gestanzten Rohrböden eingeschweißt und das Gehäuse ist mit den Rohrböden verschweißt.

Die DE 10 2010 025 030 B4 offenbart einen Wärmeübertrager für einen Verbrennungsmotor, der beispielsweise zur Kühlung eines für die Abgasrückführung bestimmten Abgasstroms eingesetzt werden soll. Der Wärmeübertrager weist hierbei ein aus zwei miteinander verbundenen Tiefziehtöpfen gebildetes Grundrohr auf. Die beiden Enden des Grundrohrs weisen jeweils einen Rohrboden auf, wobei die einzelnen Rohrböden jeweils einteiliger Bestandteil der Tiefziehtöpfe sind. Innerhalb des Grundrohrs erstreckt sich zwischen den beiden Rohrböden ein Rohrbündel.

Insbesondere die Art des bei der Fertigung der Wärmeübertrager häufig vorgenommenen Einschiebens und/oder Einpressens der als Rohrböden dienenden Tiefziehtöpfe in Tiefziehrichtung führt dazu, dass nicht die komplette Länge des Grundrohrs bzw. des Gehäuses des Wärmeübertragers als Wärmeübertragungsbereich genutzt werden kann. Die im Grundrohr bzw. im Gehäuse des Wärmeübertragers angeordneten abgasführenden Rohre sind jeweils um die Tiefziehhöhe kürzer als das Grundrohr bzw. das Gehäuse des Wärmeübertragers.

### Darstellung der Erfindung, Aufgabe, Lösung, Vorteile

Es ist die Aufgabe der Erfindung, einen Wärmeübertrager zu schaffen, welcher gegenüber dem Stand der Technik verbessert ist und eine höhere Wärmeübertragungsrate zur Verfügung stellt.

Dies wird erreicht mit den Merkmalen von Anspruch 1.

Ein Ausführungsbeispiel der Erfindung betrifft einen Wärmeübertrager, insbesondere einen Abgaswärmeübertrager oder einen Ladeluftkühler für ein Kraftfahrzeug mit einem Gehäuse mit einer ersten Gehäuseseite und mit einer der ersten Gehäuseseite gegenüberliegenden zweiten Gehäuseseite und mit einer Gehäuseinnenwand und mit einer Gehäuseaußenwand, wobei in dem Gehäuse von einem Gas durchströmbare Rohre angeordnet sind, welche jeweils ein erstes Rohrende und ein dem ersten Rohrende gegenüberliegendes zweites Rohrende aufweisen, und mit einem im Bereich der ersten Gehäuseseite angeordneten ersten Rohrboden, wobei der erste Rohrboden eine Anzahl erster Durchführungsöffnungen aufweist, welche von den ersten Rohrenden durchragt werden, und mit einem im Bereich der zweiten Gehäuseseite angeordneten zweiten Rohrboden, wobei der zweite Rohrboden eine Anzahl zweiter Durchführungsöffnungen aufweist, welche von den zweiten Rohrenden durchragt werden, wobei der erste Rohrboden eine erste Ebene bildet und der zweite Rohrboden eine zweite Ebene bildet, wobei der erste Rohrboden einen umlaufenden und in einem ersten Winkel α von der ersten Ebene hochgestellten ersten Rand aufweist und der zweite Rohrboden einen umlaufenden und in einem zweiten Winkel β von der zweiten Ebene hochgestellten zweiten Rand aufweist, wobei der erste Rand im Bereich der ersten Gehäuseseite mit der Gehäuseinnenwand oder im Bereich der ersten Gehäuseseite mit der Gehäuseaußenwand verbunden ist und/oder der zweite Rand im Bereich der zweiten Gehäuseseite mit der Gehäuseinnenwand oder im Bereich der zweiten Gehäuseseite mit der Gehäuseaußenwand verbunden ist. Diese Konstruktionsform erlaubt in vorteilhafter Weise über die gesamte Länge des Gehäuses eine effektive Wärmeübertragung zwischen dem in den Rohren geführten Abgasstrom und einem innerhalb des Gehäuses die Rohre umströmenden Kühlungsmittels. Dabei bedeutet das Durchragen, dass das Rohr von einer Seite kommend in die Durchführungsöffnung zumindest eingreift und gegebenenfalls auf der gegenüberliegenden Seite wieder aus der Durchführungsöffnung heraus tritt.

Bei einem vorteilhaften Ausführungsbeispiel des Wärmeübertragers weist der erste Rand eine erste Kontaktseite und eine der ersten Kontaktseite gegenüberliegende zweite Kontaktseite auf, wobei die erste Kontaktseite im Bereich der ersten Gehäuseseite mit der Gehäuseinnenwand verbunden ist oder die zweite Kontaktseite im Bereich der ersten Gehäuseseite mit der Gehäuseaußenwand verbunden ist.

Es ist darüber hinaus vorteilhaft, wenn der Wärmeübertrager am zweiten Rand eine erste Kontaktfläche und eine der ersten Kontaktfläche gegenüberliegende zweite Kontaktfläche aufweist, wobei die erste Kontaktfläche im Bereich der zweiten Gehäuseseite mit der Gehäuseinnenwand verbunden ist oder die zweite Kontaktfläche im Bereich der zweiten Gehäuseseite mit der Gehäuseaußenwand verbunden ist. In vorteilhafter Weise können so die Rohrböden mit dem Gehäuse verbunden werden, ohne dass der erste Rand oder der zweite Rand den für die Wärmeübertragung zur Verfügung stehenden Raum reduzieren.

Eine weitere Ausführungsform des Wärmeübertragers sieht vor, dass die Rohre im Wesentlichen in Längsrichtung parallel nebeneinanderliegend angeordnet sind, derart, dass zwischen den Rohren von einem Kühlmittel durchströmbare Spalte ausgebildet sind. Durch die Variation der Spalttiefe lässt sich das Verhältnis von Abgasmenge und Wärmeübertragungsleistung variieren.

Bei einem weiteren vorteilhaften Ausführungsbeispiel des Wärmeübertragers sind die erste Kontaktseite und/oder die zweite Kontaktseite und/oder die erste Kontaktfläche und/oder die zweite Kontaktfläche mit der Gehäuseinnenwand und/oder der Gehäuseaußenwand mit einem Lot verbunden. Dies erleichtert die Herstellung des Wärmeübertragers in einem Kassettier- und Lötverfahren.

Bei einem besonders vorteilhaften Ausführungsbeispiel des Wärmeübertragers sind die erste Kontaktseite und/oder die zweite Kontaktseite und/oder die erste Kontaktfläche und/oder die zweite Kontaktfläche mit der Gehäuseinnenwand und/oder der Gehäuseaußenwand im Wesentlichen stoffschlüssig verbunden. Dadurch wird eine besonders feste Verbindung zwischen den Rohrböden und dem Gehäuse möglich, welche die Druckbeaufschlagung während des Betriebs des Wärmeübertragers erleichtert.

Bei einer weiteren Ausführungsform des Wärmeübertragers sind die ersten Rohrenden im Bereich der ersten Durchführungsöffnungen mit dem ersten Rohrboden durch ein Lot verbunden und die zweiten Rohrenden sind im Bereich der zweiten Durchführungsöffnungen mit dem zweiten Rohrboden durch ein Lot verbunden. Auch hierdurch wird die Herstellung des Wärmeübertragers durch ein Kassettier- und Lötverfahren vereinfacht.

Ein vorteilhaftes Ausführungsbeispiel des Wärmeübertragers sieht vor, dass die ersten Durchführungsöffnungen und/oder die zweiten Durchführungsöffnungen jeweils Durchzüge aufweisen, durch welche die ersten Rohrenden und/oder die zweiten Rohrenden hindurchragen. Hierdurch wird die Fertigung erheblich vereinfacht und eine höhere Stabilität des Wärmeübertragers im Bereich der ersten Gehäuseseite und der zweiten Gehäuseseite erreicht.

Bei einer zusätzlichen Ausführungsform des Wärmeübertragers weist das Gehäuse eine Einlassöffnung für eine Kühlmittelzufuhr und/oder eine Auslassöffnung für eine Kühlmittelabfuhr auf.

Bei weiteren Ausführungsbeispielen des Wärmeübertragers sind die Rohre als Flachrohre ausgebildet und/oder zwischen den Rohren sind Turbulenzeinlagen und/oder Abstandshalter und/oder Wellrippen angeordnet und/oder die Rohre weisen eine im Wesentlichen glatte Oberfläche und/oder einen im Wesentlichen kreisrunden Querschnitt auf.

Bei einem besonders vorteilhaften Ausführungsbeispiel des Wärmeübertragers ist im Bereich des Gehäuses ein Bypass-Kanal angeordnet. Dies erlaubt die Steuerung der Abgasmenge, welche durch den Wärmeübertragungsbereich des Wärmeübertragers geleitet wird.

Eine weitere Ausführungsform des Wärmeübertragers sieht vor, dass der erste Rohrboden und der zweite Rohrboden in einem Tiefziehverfahren hergestellt sind. Dies ist ein besonders kosteneffizientes Herstellungsverfahren für die Rohrböden.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische seitliche Ansicht eines erfindungsgemäßen Wärmeübertragers,
- Fig. 2: eine perspektivische Ansicht des Wärmeübertragers gemäß Figur 1,
- Fig. 3: eine schematische Detailansicht eines Teils des Wärmeübertragers gemäß Figur 1,
- Fig. 4: eine schematische Detailansicht eines weiteren Teils des Wärmeübertragers gemäß Figur 1,
- Fig. 5: eine schematische seitliche Ansicht eines weiteren Ausführungsbeispiels eines Wärmeübertragers,
- Fig. 6: eine perspektivische Ansicht des Wärmeübertragers gemäß Figur 5,
- Fig. 7: eine schematische Detailansicht eines Teils des Wärmeübertragers gemäß Figur 5, und
- Fig. 8: eine schematische Detailansicht eines weiteren Teils des Wärmeübertragers gemäß Figur 5.

### Bevorzugte Ausführung der Erfindung

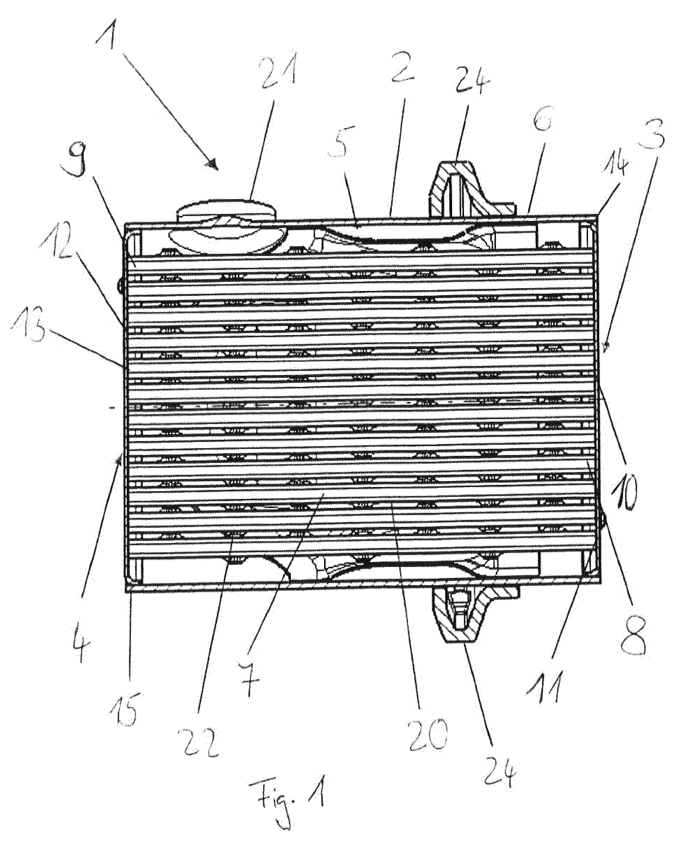

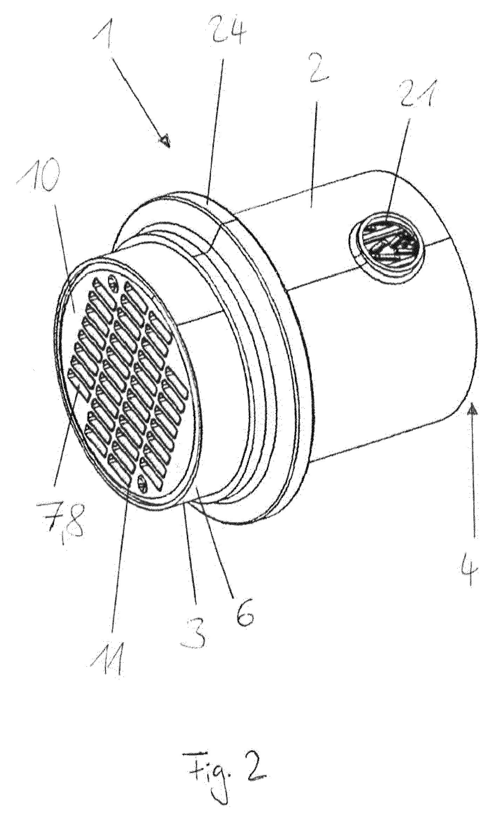

Die Figuren 1 und 2 zeigen ein Ausführungsbeispiel des erfindungsgemäßen Wärmeübertragers 1. Der Wärmeübertrager 1 ist beispielhaft als Abgaswärmeübertrager in einem Abgasrückführsystem eines Kraftfahrzeugs angeordnet. Alternativ kann der Wärmeübertrager 1 auch als ein Ladeluftkühler in einem Abgasrückführsystem eines Kraftfahrzeugs angeordnet sein. Darüber hinaus kann der Wärmeübertrager 1 auch anderweitig angeordnet sein.

Der Wärmeübertrager 1 weist ein Gehäuse 2 auf. Das Gehäuse 2 ist im Wesentlichen als eine Art rohrförmiger Mantelkörper, beispielsweise aus Stahlblech, ausgebildet und weist eine Gehäuseinnenwand 5 und eine Gehäuseaußenwand 6 auf.

Endseitig weist das Gehäuse 2 eine erste Gehäuseseite 3 und eine der ersten Gehäuseseite 3 gegenüberliegende endseitige, zweite Gehäuseseite 4 auf. Umfangsseitig weist das Gehäuse 2 eine Einlassöffnung 21 und eine nicht dargestellte Auslassöffnung auf. Über die Einlassöffnung 21 und die Auslassöffnung ist ein im Wesentlichen von der Gehäuseinnenwand 5 abgegrenzter Gehäuseinnenraum mit einem Kühlmittelkreislauf fluidverbunden. Dabei strömt ein im Wesentlichen flüssiges Kühlmittel durch die Einlassöffnung 21 in den Gehäuseinnenraum hinein und durch die Auslassöffnung aus dem Gehäuseinnenraum hinaus.

Im Bereich des Gehäuseinnenraums sind eine Anzahl Rohre 7 parallel zueinander und parallel zur Längsrichtung des Gehäuses 2 angeordnet. Die Rohre 7 weisen ein erstes Rohrende 8 auf, welches im Bereich der ersten Gehäuseseite 3 angeordnet ist und ein zweites Rohrende 9, welches im Bereich der zweiten Gehäuseseite 4 angeordnet ist. Die Rohre 7 sind beispielhaft als Flachrohre ausgebildet. In alternativen Ausführungsformen können die Rohre 7 auch einen im Wesentlichen kreisrunden Querschnitt aufweisen.

Im Bereich der ersten Gehäuseseite 3 ist ein erster Rohrboden 10 im Wesentlichen senkrecht zur Längsachse des Gehäuses 2 angeordnet. Der erste Rohrboden 10 weist eine Anzahl vertikal zur Längsrichtung des Gehäuses 2 angeordneter erster Durchführungsöffnungen 11 auf, die von den ersten Rohrenden 8 durchragt werden.

Im Bereich der zweiten Gehäuseseite 4 ist ein zweiter Rohrboden 12 im Wesentlichen senkrecht zur Längsachse des Gehäuses 2 angeordnet. Der zweite Rohrboden 12 weist eine Anzahl vertikal zur Längsrichtung des Gehäuses 2 angeordneter zweiter Durchführungsöffnungen 13 auf, die von den zweiten Rohrenden 9 durchragt werden.

Die ersten Durchführungsöffnungen 11 und die zweiten Durchführungsöffnungen 13 können Durchzüge aufweisen. Die ersten Rohrenden 8 können im Bereich der ersten Durchführungsöffnungen 11 mit dem ersten Rohrboden 10 verlötet sein. Die zweiten Rohrenden 9 können im Bereich der zweiten Durchführungsöffnungen 13 mit dem zweiten Rohrboden 12 verlötet sein.

Durch die Rohre 7 strömt beispielsweise ein Abgasstrom, der von der Brennkraftmaschine des Kraftfahrzeuges ausgestoßen wird. Der Abgasstrom strömt beispielsweise im Bereich der ersten Rohrenden 8 in die Rohre 7 hinein und im Bereich der zweiten Rohrenden 9 aus den Rohren 7 hinaus und wird anschließend einem Ansaugtrakt der Brennkraftmaschine zugeführt.

Die Rohre 7 sind derart beabstandet zueinander angeordnet, dass zwischen ihnen Spalte 20 angeordnet sind. Die Spalte 20 werden von dem Kühlmittel durchströmt. Die Rohre 7 werden von dem Kühlmittel umströmt. Dabei wird vom Abgas Wärme auf das Kühlmittel übertragen und das Abgas durch das Kühlmittel zumindest teilweise gekühlt.

In Ausführungsbeispielen, in denen der Wärmeübertrager 1 als Ladeluftkühler ausgebildet ist, strömt durch die Rohre 7 Ladeluft und wird durch das Kühlmittel gekühlt.

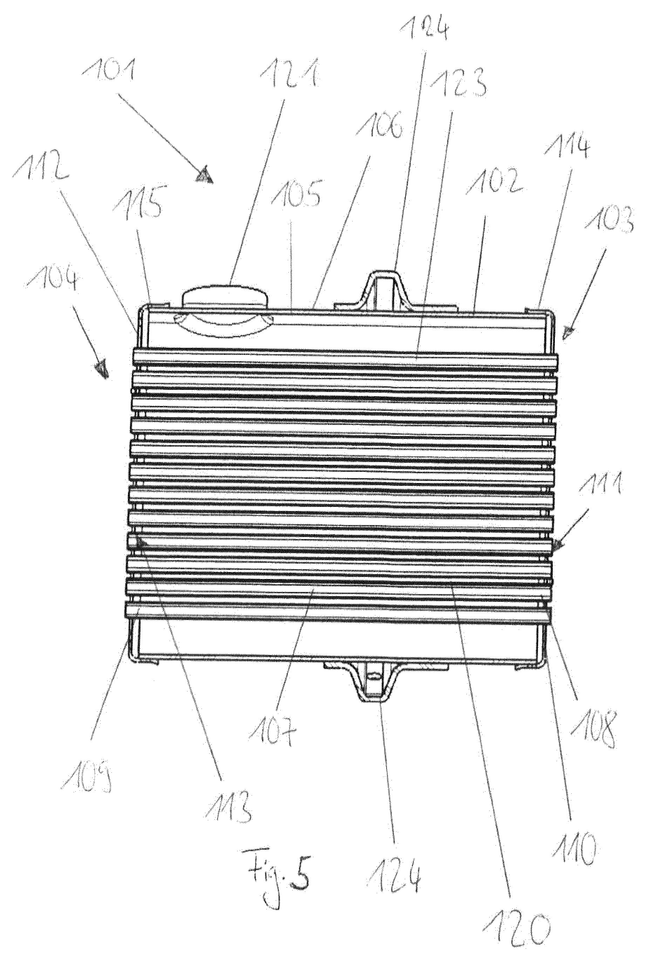

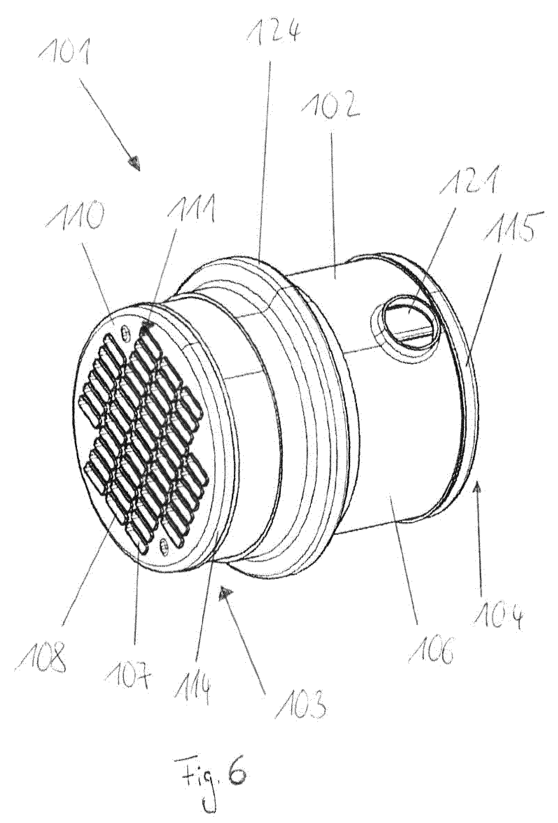

Die Rohre 7 weisen eine Oberfläche auf, auf welcher in dem in den Figuren 1 und 2 dargestellten Ausführungsbeispiel Abstandshalter 22 angeordnet sind. In alternativen Ausführungsbeispielen können auf der Oberfläche der Rohre 7 und/oder zwischen den Rohren 7 im Bereich der Spalte 20 auch Turbulenzeinlagen und/oder Wellrippen angeordnet sein. In den Figuren 5 und 6 ist ein Ausführungsbeispiel des Wärmeübertragers 1 dargestellt, welcher Rohre 107 mit einer glatten Oberfläche 123 aufweist.

Der erste Rohrboden 10 bildet in dem in den Figuren 1 und 2 dargestellten Ausführungsbeispiel im Bereich der ersten Gehäuseseite 3 eine senkrecht zur Längsrichtung des Gehäuses 2 angeordnete erste Ebene. Der erste Rohrboden 10 weist einen umlaufenden und in einem ersten Winkel α von der ersten Ebene hochgestellten ersten Rand 14 auf.

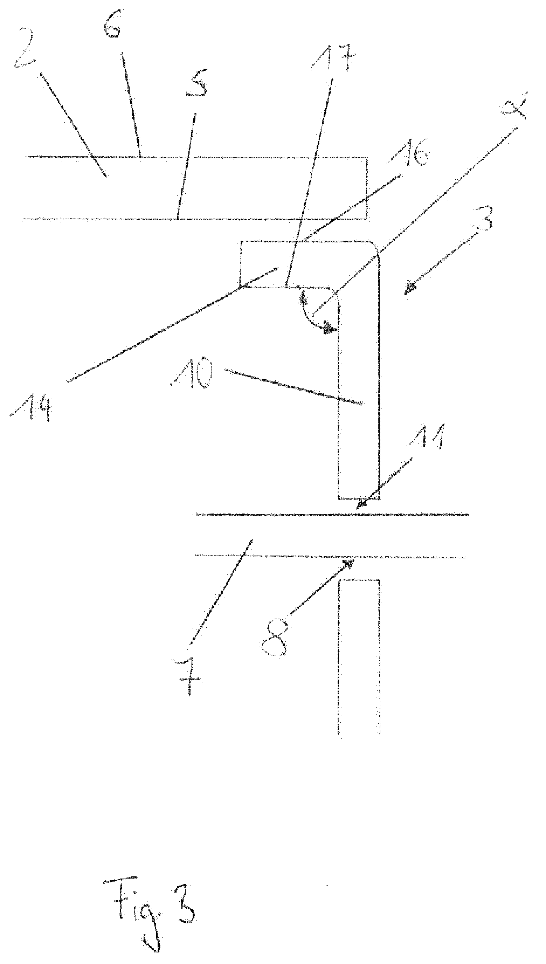

Eine detaillierte Darstellung des ersten Rands 14 des in den Figuren 1 und 2 dargestellten Ausführungsbeispiels des Wärmeübertrager 1 ist in der Abbildung 3 dargestellt. Der erste Rand 14 weist eine erste Kontaktseite 16 und eine der ersten Kontaktseite 16 gegenüberliegende zweite Kontaktseite 17 auf. Die erste Kontaktseite 16 ist im Bereich der ersten Gehäuseseite 3 mit der Gehäuseinnenwand 5 verbunden. Dabei können die erste Kontaktseite 16 und die Gehäuseinnenwand 5 insbesondere mit einem Lot und/oder stoffschlüssig verbunden sein. Der Übersichtlichkeit halber sind die erste Kontaktseite 16 und die Gehäuseinnenwand 5 sowie die Rohre 7 und der erste Rohrboden 10 zueinander beabstandet dargestellt.

Der zweite Rohrboden 12 bildet in dem in den Figuren 1 und 2 dargestellten Ausführungsbeispiel im Bereich der zweiten Gehäuseseite 4 eine senkrecht zur Längsrichtung des Gehäuses 2 angeordnete zweite Ebene. Der zweite Rohrboden 12 weist einen umlaufenden und in einem ersten Winkel β von der zweiten Ebene hochgestellten zweiten Rand 15 auf.

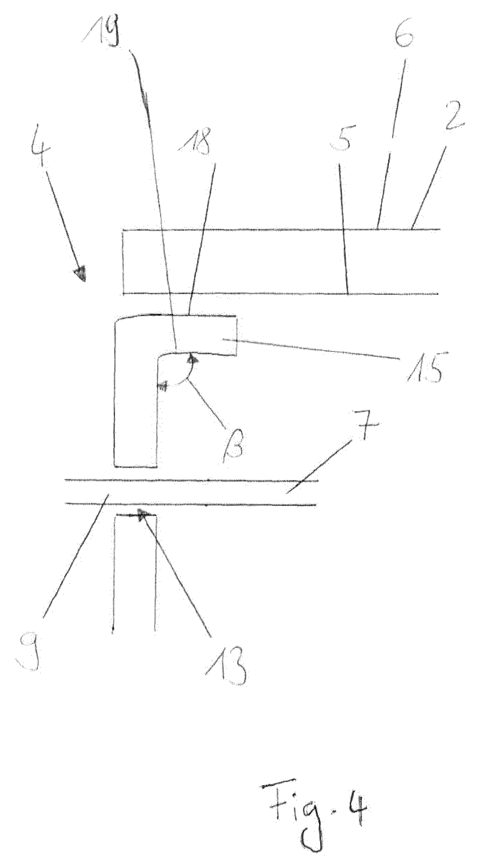

Eine detaillierte Darstellung des zweiten Rands 15 des in den Figuren 1 und 2 dargestellten Ausführungsbeispiels des Wärmeübertragers 1 ist in der Abbildung 4 dargestellt. Der zweite Rand 15 weist eine erste Kontaktfläche 18 und eine der ersten Kontaktfläche 18 gegenüberliegende zweite Kontaktfläche 19 auf. Die erste Kontaktfläche 18 ist im Bereich der zweiten Gehäuseseite 4 mit der Gehäuseinnenwand 5 verbunden. Dabei können die erste Kontaktfläche 18 und die Gehäuseinnenwand 5 insbesondere mit einem Lot und/oder stoffschlüssig verbunden sein. Der Übersichtlichkeit halber sind die erste Kontaktfläche 18 und die Gehäuseinnenwand 5 sowie die Rohre 7 und der zweite Rohrboden 12 zueinander beabstandet dargestellt.

Die Figuren 5 und 6 zeigen ein weiteres Ausführungsbeispiel eines erfindungsgemäßen Wärmeübertragers 101. Der Wärmeübertrager 101 ist beispielhaft als Abgaswärmeübertrager in einem Abgasrückführsystem eines Kraftfahrzeugs angeordnet. Alternativ kann der Wärmeübertrager 101 auch als ein Ladeluftkühler innerhalb eines Abgasrückführsystems eines Kraftfahrzeugs angeordnet sein. Darüber hinaus kann der Wärmeübertrager 101 auch anderweitig angeordnet sein.

Der Wärmeübertrager 101 weist ein Gehäuse 102 auf. Das Gehäuse 102 ist im Wesentlichen als eine Art rohrförmiger Mantelkörper, beispielsweise aus Stahlblech, ausgebildet und weist eine Gehäuseinnenwand 105 und eine Gehäuseaußenwand 106 auf.

Endseitig weist das Gehäuse 102 eine erste Gehäuseseite 103 und eine der ersten Gehäuseseite 103 gegenüberliegende endseitige, zweite Gehäuseseite 104 auf. Umfangsseitig weist das Gehäuse 102 eine Einlassöffnung 121 und eine nicht dargestellte Auslassöffnung auf. Über die Einlassöffnung 121 und die Auslassöffnung ist ein im Wesentlichen von der Gehäuseinnenwand 105 abgegrenzter Gehäuseinnenraum mit einem Kühlmittelkreislauf fluidverbunden. Dabei strömt ein im Wesentlichen flüssiges Kühlmittel durch die Einlassöffnung 121 in den Gehäuseinnenraum hinein und durch die Auslassöffnung aus dem Gehäuseinnenraum hinaus.

Im Bereich des Gehäuseinnenraums sind eine Anzahl Rohre 107 parallel zueinander und parallel zur Längsrichtung des Gehäuses 102 angeordnet. Die Rohre 107 weisen ein erstes Rohrende 108 auf, welches im Bereich der ersten Gehäuseseite 103 angeordnet ist und ein zweites Rohrende 109, welches im Bereich der zweiten Gehäuseseite 104 angeordnet ist. Die Rohre 107 sind beispielhaft als Flachrohre ausgebildet. In alternativen Ausführungsformen können die Rohre auch einen im Wesentlichen kreisrunden Querschnitt aufweisen.

Im Bereich der ersten Gehäuseseite 103 ist ein erster Rohrboden 110 im Wesentlichen senkrecht zur Längsachse des Gehäuses 102 angeordnet. Der erste Rohrboden 110 weist eine Anzahl vertikal zur Längsrichtung des Gehäuses 102 angeordneter erster Durchführungsöffnungen 111 auf, die von den ersten Rohrenden 108 durchragt werden. Im Bereich der zweiten Gehäuseseite 104 ist ein zweiter Rohrboden 112 im Wesentlichen senkrecht zur Längsachse des Gehäuses 102 angeordnet. Der zweite Rohrboden 112 weist eine Anzahl vertikal zur Längsrichtung des Gehäuses 102 angeordneter zweiter Durchführungsöffnungen 113 auf, die von den zweiten Rohrenden 109 durchragt werden.

Die ersten Durchführungsöffnungen 111 und die zweiten Durchführungsöffnungen 113 können Durchzüge aufweisen. Die ersten Rohrenden 108 können im Bereich der ersten Durchführungsöffnungen 111 mit dem ersten Rohrboden 110 verlötet sein. Die zweiten Rohrenden 109 können im Bereich der zweiten Durchführungsöffnungen 113 mit dem zweiten Rohrboden 112 verlötet sein.

Durch die Rohre 107 strömt beispielsweise ein Abgasstrom, der von der Brennkraftmaschine des Kraftfahrzeuges ausgestoßen wird. Der Abgasstrom strömt beispielsweise im Bereich der ersten Rohrenden 108 in die Rohre 107 hinein und im Bereich der zweiten Rohrenden 109 aus den Rohren 107 hinaus und wird anschließend einem Ansaugtrakt der Brennkraftmaschine zugeführt.

Die Rohre 107 sind derart beabstandet zueinander angeordnet, dass zwischen ihnen Spalte 120 angeordnet sind. Die Spalte 120 werden von dem Kühlmittel durchströmt. Die Rohre 107 werden von dem Kühlmittel umströmt. Dabei wird vom Abgas Wärme auf das Kühlmittel übertragen und das Abgas durch das Kühlmittel zumindest teilweise gekühlt.

In Ausführungsbeispielen, in denen der Wärmeübertrager 101 als Ladeluftkühler ausgebildet ist, strömt durch die Rohre 107 Ladeluft und wird durch das Kühlmittel gekühlt.

Die Rohre 107 weisen eine glatte Oberfläche 123 auf. In alternativen Ausführungsformen können auf der Oberfläche der Rohre 107 Abstandshalter angeordnet sein und/oder es können auf der Oberfläche der Rohre 107 und/oder zwischen den Rohren 107 im Bereich der Spalte 120 Turbulenzeinlagen und/oder Wellrippen angeordnet sein.

Der erste Rohrboden 110 bildet in dem in den Figuren 5 und 6 dargestellten Ausführungsbeispiel im Bereich der ersten Gehäuseseite 103 eine senkrecht zur Längsrichtung des Gehäuses 102 angeordnete erste Ebene. Der erste Rohrboden 110 weist einen umlaufenden und in einem ersten Winkel α von der ersten Ebene hochgestellten ersten Rand 114 auf.

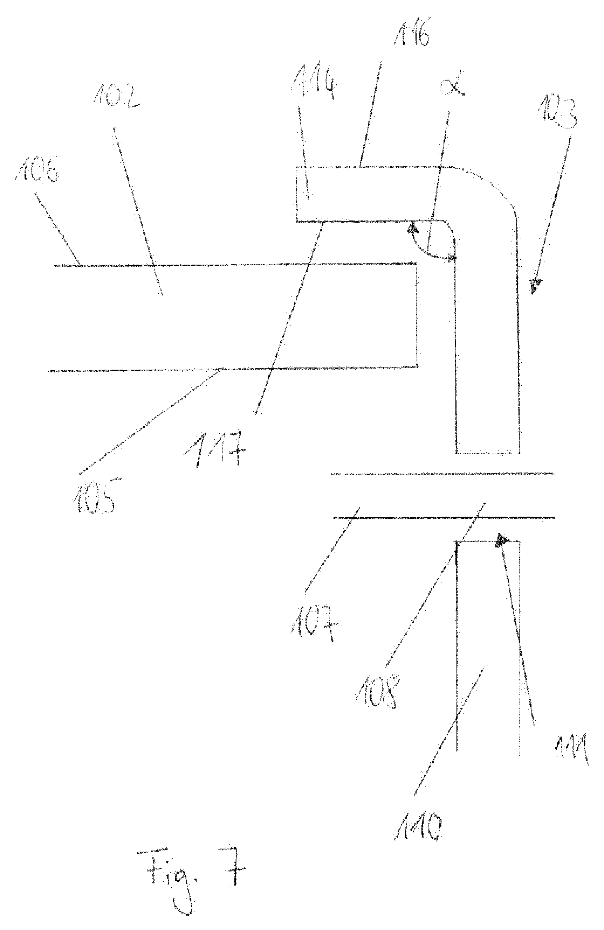

Eine detaillierte Darstellung des ersten Rands 114 des in den Figuren 5 und 6 dargestellten Ausführungsbeispiels des Wärmeübertragers 101 ist in der Abbildung 7 dargestellt. Der erste Rand 114 weist eine erste Kontaktseite 116 und eine der ersten Kontaktseite 116 gegenüberliegende zweite Kontaktseite 117 auf. Die zweite Kontaktseite 117 ist im Bereich der ersten Gehäuseseite 103 mit der Gehäuseaußenwand 106 verbunden. Dabei können die zweite Kontaktseite 117 und die Gehäuseaußenwand 106 insbesondere mit einem Lot und/oder stoffschlüssig verbunden sein. Der Übersichtlichkeit halber sind die zweite Kontaktseite 117 und die Gehäuseaußenwand 106 sowie die Rohre 107 und der zweite Rohrboden 112 zueinander beabstandet dargestellt.

Der zweite Rohrboden 112 bildet in dem in den Figuren 5 und 6 dargestellten Ausführungsbeispiel im Bereich der zweiten Gehäuseseite 104 eine senkrecht zur Längsrichtung des Gehäuses 102 angeordnete zweite Ebene. Der zweite Rohrboden 112 weist einen umlaufenden und in einem ersten Winkel β von der zweiten Ebene hochgestellten zweiten Rand 115 auf.

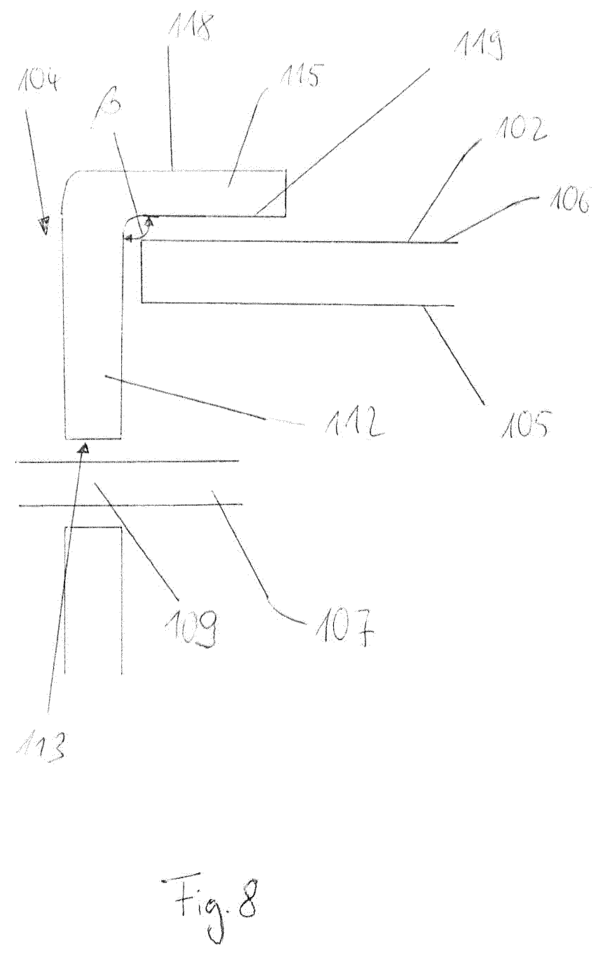

Eine detaillierte Darstellung des zweiten Rands 115 des in den Figuren 5 und 6 dargestellten Ausführungsbeispiels des Wärmeübertragers 101 ist in der Abbildung 8 dargestellt. Der zweite Rand 115 weist eine erste Kontaktfläche 118 und eine der ersten Kontaktfläche 118 gegenüberliegende zweite Kontaktfläche 119 auf. Die zweite Kontaktfläche 119 ist im Bereich der zweiten Gehäuseseite 104 mit der Gehäuseaußenwand 106 verbunden. Dabei können die zweite Kontaktfläche 119 und die Gehäuseaußenwand 106 insbesondere mit einem Lot und/oder stoffschlüssig verbunden sein. Der Übersichtlichkeit halber sind die zweite Kontaktfläche 119 und die Gehäuseaußenwand 106 sowie die Rohre 107 und der zweite Rohrboden 112 zueinander beabstandet dargestellt.

Die in den Figuren 1, 2, 5 und 6 dargestellten Ausführungsbeispiele weisen darüber hinaus einen umlaufenden Flansch 24 oder einen umlaufenden Flansch 124 auf.

Die in den Figuren 1, 2, 5 und 6 dargestellten Rohrböden 10, 12, 110 und 112 können insbesondere als Tiefziehtöpfe gefertigt sein.

## Patentansprüche

1. Wärmeübertrager (1, 101), insbesondere Abgaswärmeübertrager oder Ladeluftkühler für ein Kraftfahrzeug, mit einem Gehäuse (2, 102) mit einer ersten Gehäuseseite (3, 103) und mit einer der ersten Gehäuseseite (3, 103) gegenüberliegenden zweiten Gehäuseseite (4, 104) und mit einer Gehäuseinnenwand (5, 105) und mit einer Gehäuseaußenwand (6, 106), wobei in dem Gehäuse (2, 102) von einem Gas durchströmbare Rohre (7, 107) angeordnet sind, welche jeweils ein erstes Rohrende (8, 108) und ein dem ersten Rohrende (8, 108) gegenüberliegendes zweites Rohrende (9, 109) aufweisen, und mit einem im Bereich der ersten Gehäuseseite (3, 103) angeordneten ersten Rohrboden (10,110), wobei der erste Rohrboden (10, 110) eine Anzahl erster Durchführungsöffnungen (11, 111) aufweist, welche von den ersten Rohrenden (8, 108) durchragt werden, und mit einem im Bereich der zweiten Gehäuseseite (4,104) angeordneten zweiten Rohrboden (12, 112), wobei der zweite Rohrboden (12, 112) eine Anzahl zweiter Durchführungsöffnungen (13, 113) aufweist, welche von den zweiten Rohrenden (9, 109) durchragt werden, wobei der erste Rohrboden (10, 110) eine erste Ebene bildet und der zweite Rohrboden (12, 112) eine zweite Ebene bildet, wobei der erste Rohrboden (10, 110) einen umlaufenden und in einem ersten Winkel (α) von der ersten Ebene hochgestellten ersten Rand (14, 114) aufweist und der zweite Rohrboden (12, 112) einen umlaufenden und in einem zweiten Winkel (β) von der zweiten Ebene hochgestellten zweiten Rand (15, 115) aufweist, **dadurch gekennzeichnet, dass** der erste Rand (14, 114) im Bereich der ersten Gehäuseseite (3, 103) mit der Gehäuseinnenwand (5, 105) oder im Bereich der ersten Gehäuseseite (3, 103) mit der Gehäuseaußenwand (6, 106) verbunden ist und/oder der zweite Rand (15, 115) im Bereich der zweiten Gehäuseseite (4, 104) mit der Gehäuseinnenwand (5, 105) oder im Bereich der zweiten Gehäuseseite (4, 104) mit der Gehäuseaußenwand (6, 106) verbunden ist.

2. Wärmeübertrager (1, 101) nach Anspruch 1, **dadurch gekennzeichnet, dass** der erste Rand (14, 114) eine erste Kontaktseite (16, 116) und eine der ersten Kontaktseite (16, 116) gegenüberliegende zweite Kontaktseite (17, 117) aufweist, wobei die erste Kontaktseite (16, 116) im Bereich der ersten Gehäuseseite (3, 103) mit der Gehäuseinnenwand (5, 105) verbunden ist oder die zweite Kontaktseite (17, 117) im Bereich der ersten Gehäuseseite (3, 103) mit der Gehäuseaußenwand (6, 106) verbunden ist.

3. Wärmeübertrager (1, 101) nach Anspruch 1 oder 2, **dadurch gekennzeichnet, dass** der zweite Rand (15, 115) eine erste Kontaktfläche (18, 118) und eine der ersten Kontaktfläche (18, 118) gegenüberliegende zweite Kontaktfläche (19, 119) aufweist, wobei die erste Kontaktfläche (18, 118) im Bereich der zweiten Gehäuseseite (4, 104) mit der Gehäuseinnenwand (5, 105) verbunden ist oder die zweite Kontaktfläche (19, 119) im Bereich der zweiten Gehäuseseite (4, 104) mit der Gehäuseaußenwand (6, 106) verbunden ist.

4. Wärmeübertrager (1,101) nach Anspruch 1, 2 oder 3, **dadurch gekennzeichnet, dass** die Rohre (7, 107) im Wesentlichen in Längsrichtung parallel nebeneinanderliegend angeordnet sind, derart, dass zwischen den Rohren (7, 107) von einem Kühlmittel durchströmbare Spalte (20, 120) ausgebildet sind.

5. Wärmeübertrager (1, 101) nach einem der Ansprüche 1 bis 4, **dadurch gekennzeichnet, dass** die erste Kontaktseite (16, 116) und/oder die zweite Kontaktseite (17, 117) und/oder die erste Kontaktfläche (18, 118) und/oder die zweite Kontaktfläche (19, 119) mit der Gehäuseinnenwand (5, 105) und/oder der Gehäuseaußenwand (6, 106) mittels Löten oder mittels Schweißen verbunden sind.

6. Wärmeübertrager (1, 101) nach einem der Ansprüche 1 bis 5, **dadurch gekennzeichnet, dass** die erste Kontaktseite (16, 116) und/oder die zweite Kontaktseite (17, 117) und/oder die erste Kontaktfläche (18, 118) und/oder die zweite Kontaktfläche (19, 119) mit der Gehäuseinnenwand (5, 105) und/oder der Gehäuseaußenwand (6, 106) im Wesentlichen stoffschlüssig verbunden sind.

7. Wärmeübertrager (1,101) nach einem der vorhergehenden Ansprüche, **dadurch gekennzeichnet, dass** die ersten Rohrenden (8, 108) im Bereich der ersten Durchführungsöffnungen (11, 111) mit dem ersten Rohrboden (10, 110) durch Löten oder Schweißen verbunden sind und die zweiten Rohrenden (9, 109) im Bereich der zweiten Durchführungsöffnungen (13, 113) mit dem zweiten Rohrboden (12, 112) durch Löten oder Schweißen verbunden sind.

8. Wärmeübertrager (1, 101) nach einem der vorhergehenden Ansprüche, **dadurch gekennzeichnet, dass** die ersten Durchführungsöffnungen (11, 111) und/oder die zweiten Durchführungsöffnungen (13, 113) jeweils Durchzüge aufweisen, durch welche die ersten Rohrenden (8, 108) und/oder die zweiten Rohrenden (9, 109) hindurchragen.

9. Wärmeübertragers (1, 101) nach einem der vorhergehenden Ansprüche, **dadurch gekennzeichnet, dass** das Gehäuse (2, 102) eine Einlassöffnung (21, 121) für eine Kühlmittelzufuhr und/oder eine Auslassöffnung für eine Kühlmittelabfuhr aufweist.

10. Wärmeübertrager (1, 101) nach einem der vorhergehenden Ansprüche, **dadurch gekennzeichnet, dass** die Rohre (7, 107) als Flachrohre ausgebildet sind und/oder zwischen den Rohren (7, 107) Turbulenzeinlagen und/oder Abstandshalter (22) und/oder Wellrippen angeordnet sind und/oder die Rohre (7, 107) eine im Wesentlichen glatte Oberfläche (123) und/oder einen im Wesentlichen kreisrunden Querschnitt aufweisen.

11. Wärmeübertrager (1, 101) nach einem der vorhergehenden Ansprüche, **dadurch gekennzeichnet, dass** der erste Rohrboden (10, 110) und/oder der zweite Rohrboden (12, 112) in einem Tiefziehverfahren hergestellt sind.

12. Wärmeübertrager (1, 101) nach einem der vorhergehenden Ansprüche, **dadurch gekennzeichnet, dass** im Bereich des Gehäuses (2, 102) ein Bypass-Kanal angeordnet ist.
